# EUROPÄISCHE PATENTSCHRIFT

(11) **EP 2 992 028 B1**
(45) Veröffentlichungstag und Bekanntmachung des Hinweises auf die Patenterteilung: **04.10.2017**
(21) Anmeldenummer: 14720612.2
(22) Anmeldetag: 30.04.2014
(51) Int. Cl.: C08G 18/52, C08G 18/58, C08G 18/64, C08G 18/70, C08G 18/08, C08G 18/28, C09D 175/04, C08G 18/38, C08G 18/46

(54) **WASSEREMULGIERBARE ISOCYANATE FÜR BESCHICHTUNGEN MIT VERBESSERTEM GLANZ**
WATER-EMULSIFIABLE ISOCYANATES FOR COATINGS HAVING AN IMPROVED GLOSS
ISOCYANATES ÉMULSIFIABLES DANS L'EAU POUR DES REVÊTEMENTS À BRILLANCE AMÉLIORÉE

(30) Priorität: 02.05.2013 EP 13166174
(43) Veröffentlichungstag der Anmeldung: 09.03.2016
(73) Patentinhaber: BASF SE, 67056 Ludwigshafen am Rhein (DE)
(72) Erfinder: STEINBRECHER, Angelika Maria, R-400344 Cluj-Napoca (RO); HÄBERLE, Karl, 67346 Speyer (DE); LUCAS, Frederic, 77654 Offenburg (DE)
(74) Vertreter: BASF IP Association
(86) Internationale Anmeldenummer: PCT/EP2014/058886
(87) Internationale Veröffentlichungsnummer: WO 2014/177642

(56) Entgegenhaltungen:
- EP-A1- 1 616 925
- EP-B1- 2 170 971

## Beschreibung

Die Erfindung betrifft neue wasseremulgierbare Isocyanate, ein Verfahren zur Herstellung von wasseremulgierbaren Isocyanaten und deren Verwendung.

Wasseremulgierbare Polyisocyanate werden wässrigen Polymer-Dispersionen als Vernetzungsmittel zugesetzt und sind in der Literatur vielfach beschrieben. Die Wasseremulgierbarkeit wird dadurch erreicht, dass man die Polyisocyanate mit Emulgatoren abmischt, die durch Reaktion der Polyisocyanate mit hydrophilen Molekülen erhalten werden.

Als hydrophile Moleküle vielfach verwendet werden nichtionische hydrophile Moleküle wie Polyalkylenoxid-Alkohole.

EP-A2 206 059 beschreibt in Wasser dispergierbare Polyisocyanat-Zubereitungen aus einem aliphatischen Polyisocyanat und einem Umsetzungsprodukt eines aliphatischen Polyisocyanats mit einem ein- oder mehrwertigen, nichtionischen Polyalkylenetheralkohol mit mindestens einer mindestens 10 Ethylenoxideinheiten aufweisenden Polyetherkette als Emulgator. Für geeignete Polyisocyanate werden umfangreiche Listen von Polyisocyanaten auf Basis aliphatischer und cycloaliphatischer Diisocyanate angegeben, besonders bevorzugt Isocyanurate und Biurete auf Basis von 1,6-Diisocyanatohexan (HDI) und/oder Isocyanurate auf Basis von 1-Isocyanato-3,5,5-trimethyl-5-isocyanatomethyl-cyclohexan (IPDI).

EP-A1 540 985 beschreibt ebenfalls Polyisocyanatgemische, hier weisen jedoch die Polyetherketten einen mittleren Gehalt von 5,0 bis 9,9 Ethylenoxideinheiten auf.

EP-A2 486 881 beschreibt nichtwäßrige aliphatische Polyisocyanatzubereitungen aus einer Liste von aliphatischen Polyisocyanaten und einer die Dispergierbarkeit des aliphatischen Polyisocyanats gewährleistenden Menge eines Umsetzungsproduktes aus einem aromatischen oder aliphatischen Diisocyanat und einem ein- oder (weniger bevorzugt) mehrwertigen Polyalkylenetheralkohol mit mindestens 8 Ethylenoxideinheiten in der Polyetherkette. In den Beispielen werden ausschließlich monofunktionelle Polyethylenglykole eingesetzt. Die Umsetzung der Diisocyanate mit den Alkoholen erfolgt in einem Verhältnis von 60 bis 120 mol% an OH-Gruppen bezogen auf die NCO-Gruppen des Diisocyanats. Die so erhaltenen Produkte wirken dann als Emulgatoren in den Abmischungen mit Polyisocyanaten.

WO 01/40347 beschreibt wasserdipergierbare Polyisocyanatgemische mit Polyetherketten mit einem mittleren Gehalt von 5 bis 33 Ethylenoxideinheiten und einem definierten über Allophanatgruppen gebundenen Anteil.

EP 959087 A1 beschreibt wasseremulgierbare polyethermodifizierte Polyisocyanatgemische, in denen ein hoher Anteil der Polyether über Allophanatgruppen an das Polyisocyanat gebunden ist.
Nachteilig daran ist, daß durch die Bildung von Allophanatgruppen pro Hydroxygruppe zwei Äquivalente Isocyanatgruppen abreagieren, also der NCO-Gehalt des Produktes gemessen am Edukt stark verringert wird.

Aus WO 2009/156683 sind Mischungen von wasserdispergierbaren Polyisocyanaten bekannt, die teils ionische und teils nicht-ionische Gruppen tragen.

DE-A1 199 58 170 beschreibt Polyether-modifizierte, wasserdispergierbare Polyisocyanatgemische, die mit einwertigen Polyalkylenoxidpolyetheralkoholen modifiziert sind. Ganz besonders bevorzugt sind Polyisocyanate beziehungsweise Polyisocyanatgemische mit Isocyanuratstruktur auf Basis HDI, IPDI und/oder 4,4'-Diisocyanatodicyclohexylmethan.

DE-A1 198 22 890 beschreibt wäßrige, zweikomponentige Polyurethan-Beschichtungssysteme, deren Härterkomponente aus Polyalkylenoxidpolyetheralkoholen und aliphatisch und/oder cycloaliphatisch gebundenen Isocyanatgruppen, bevorzugt Isocyanuratstrukturen auf Basis von HDI, IPDI und/oder 4,4'-Diisocyanatodicyclohexylmethan, unter Allophanatisierungsbedingungen hergestellt werden. Die überwiegende Bindung von Polyetherketten über Allophanatgruppen ist auch aus der DE-A1 198 47 077 bekannt.

Nachteilig an den beschriebenen Polyisocyanatmischungen ist, daß diese die Anforderungen, die an den Glanz der mit ihnen erhältlichen Beschichtungen gestellt werden, nicht erfüllen.

Wasseremulgierbare Isocyanate können zur Verbesserung der Dispergierbarkeit in organischen Lösungsmitteln wie z.B. Kohlensäureestern oder Lactonen gelöst werden, wie in der EP-A 697 424 beschrieben.

WO 2004/22624 beschreibt wasseremulgierbare Mischungen von Polyisocyanaten auf Basis 1,6-Hexamethylendiisocyanat mit Polyisocyanaten auf Basis von Isophorondiisocyanat, die sowohl eine hohe Härte als auch gute Wasseremulgierbarkeit zeigen.

Jedoch sind die Trocknungseigenschaften der mit diesen Beschichtungsmassen erhaltenen Beschichtungen unzureichend.

WO 2012/007431 beschreibt hochfunktionelle, Urethangruppen aufweisende Polyisocyanate, die durch Umsetzung mindestens eines multifunktionellen Alkohols mit mindestens einem Polyisocyanat in einem molaren Verhältnis von NCO-Gruppen zu OH-Gruppen von mindestens 3:1 erhältlich sind.

Nachteilig ist, daß diese hochfunktionellen, Urethangruppen aufweisenden Polyisocyanate nicht wasseremulgierbar sind.

WO 2011/124710 A beschreibt Beschichtungsmassen aus hydroxygruppenhaltigen Fettsäureglyceriden, Polyisocyanaten und Bindemitteln.
Die so erhaltenen Beschichtungen zeigen Selbstheilungseffekte beim Erwärmen.

Nachteilig ist, daß die Beschichtungsmassen, die ein dreikomponentiges System darstellen, nicht wasseremulgierbar sind. Das Patent EP 2 170 971 B1 offenbart wasserdispergierbare Polyisocyanate, die sowohl eine gute Einarbeitbarkeit in wässrige Polyollösungen als auch gute Trocknungseigenschaften auf. Zudem ergeben sie Beschichtungen mit guter Härte, die sich beispielsweise in einem guten Glanz zeigt (Absatz [0016]). Im Beispiel 1 wird ein Verfahren zur Herstellung eines wasserdispergierbaren Polyisocyanats. Es wird ein Polyisocyanat aus einem HDI-Trimer, einem monofunktionellen Polyethylenoxid und 4-Aminotoluol-2-sulfonsäure hergestellt. Aus der unveröffentlichten Europäischen Patentanmeldung 12186603.2, eingereicht am 28. September 2012 und der am selben Tage eingereichten US Provisional Application mit dem Aktenzeichen 61/706,806 ist es bekannt, den Glanz von wasseremulgierbaren Polyisocyanaten durch Einbau von Polyolen mit einer Funktionalität von 2 bis 4 und einem zahlenmittleren Molgewicht von mindestens 92 bis 1500 g/mol zu verbessern, wobei es sich bei diesen Polyolen bevorzugt um Veresterungsprodukte von Fettsäuren mit Polyalkoholen handelt.

Nachteilig daran ist, daß bei der Veresterung Produktgemische erhalten werden, die nicht eine definierte Funktionalität, sondern immer nur eine Funktionalität mit einer Streuung aufweisen.

Folgende Eigenschaften eines wasseremulgierbaren Isocyanats werden vom Anwender verlangt:
1. Das Isocyanat soll einfach zu emulgieren sein; die zwingende Verwendung anspruchsvoller Apparate wie z.B. hochscherenden Rührorganen ist nicht erwünscht.
2. Die Emulsion soll feinteilig sein, da ansonsten Störungen z.B des Glanzes oder Trübungen auftreten können.
3. Bei Beschichtungen ist ein hoher Glanz erwünscht.
4. Das wasseremulgierbare Isocyanat soll keine zu hohe Viskosität aufweisen.

Aufgabe der vorliegenden Erfindung war es, ein Verfahren zur Herstellung von wasseremulgierbaren Polyisocyanaten zur Verfügung zu stellen, die gute Emulgierbarkeitseigenschaften zeigen, eine Viskosität bei 23 °C von nicht mehr als 15 Pas aufweisen und mit denen Beschichtungen mit hohem Glanz erhalten werden.

Die Aufgabe wurde gelöst durch wasseremulgierbare Polyisocyanate, enthaltend
(A) mindestens ein Polyisocyanat auf Basis mindestens eines (cyclo)aliphatischen Diisocyanates,
(B) mindestens eine Verbindung (B) mit mindestens zwei, bevorzugt zwei bis vier, besonders bevorzugt zwei bis drei und ganz besonders bevorzugt genau zwei gegenüber Isocyanat reaktiven Gruppen, die mindestens eine Gruppe ausgewählt aus der Gruppe bestehend aus Thioethergruppen (-S-), Selanylgruppen (-Se-), Sulfoxidgruppen (-S(=O)-) und Sulfongruppen (-S(=O)₂-) enthält,
(C) mindestens eine Verbindung mit mindestens einer gegenüber Isocyanat reaktiven Gruppe und mindestens einer dispergieraktiven Gruppe, und
(D) gegebenenfalls Lösungsmittel, wobei
   - das Verhältnis von NCO-Gruppen in (A) zu gegenüber Isocyanat reaktiven Gruppen in (B) und (C) von mindestens 5:1 bis 100:1 beträgt,
   - der Gehalt an Ethylenoxidgruppen, berechnet als 44 g/mol, bezogen auf die Summe von (A), (B) und (C) mindestens 12 Gew%, bevorzugt mindestens 14, besonders bevorzugt mindestens 15 Gew% beträgt,
   - der Gehalt an Komponente (C), bezogen auf (A) mindestens 5 und bis zu 25 Gew% beträgt, und
   - die Viskosität bei 23 °C gemäß DIN EN ISO 3219/A.3 (Oktober 1994) in einem Kegel-Platte-System mit einem Geschwindigkeitsgefälle von 1000 s⁻¹ von 2500 mPas bis 12000 mPas beträgt.

Diese Polyisocyanate zeigen leichte Emulgierbarkeit, führen zu einer stabilen und feinteiligen Emulsion und die mit ihnen erhältlichen Beschichtungen zeigen einen hohen Glanz. Die Komponente (B) weist eine definierte Funktionalität ohne Varianz auf und erlaubt so den Aufbau definierter Strukturen im Polyisocyanat.

Bei den Polyisocyanaten (A) handelt es sich um Oligomere von aliphatischen oder cycloaliphatischen Diisocyanaten, in dieser Schrift kurz als (cyclo)aliphatisch bezeichnet.

Die NCO Funktionalität der Polyisocyanate (A) beträgt in der Regel mindestens 1,8 und kann bis zu 8 betragen, bevorzugt 1,8 bis 5 und besonders bevorzugt 2 bis 4.

Als Polyisocyanate kommen Isocyanuratgruppen aufweisende Polyisocyanate, Uretdiongruppen aufweisende Polyisocyanate, Biuretgruppen aufweisende Polyisocyanate, Urethan- oder Allophanatgruppen aufweisende Polyisocyanate, Oxadiazintriongruppen oder Iminooxadiazindiongruppen enthaltende Polyisocyanate oder Uretonimin-modifizierte Polyisocyanate auf Basis von geradlinigen oder verzweigten C₄-C₂₀-Alkylendiisocyanaten oder cycloaliphatischen Diisocyanaten mit insgesamt 6 bis 20 C-Atomen oder deren Gemische in Betracht.

Bei den (cyclo)aliphatischen Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Di-isocyanato-1-methylcyclohexan sowie 3 (bzw. 4), 8 (bzw. 9)-Bis(isocyanatomethyl)-tricyclo[5.2.1.0^{2.6}]decan-Isomerengemische.
Es können auch Gemische der genannten Diisocyanate vorliegen.

Die einsetzbaren Diisocyanate haben bevorzugt einen Gehalt an Isocyanatgruppen (berechnet als NCO, Molekulargewicht = 42 g/mol) von 10 bis 60 Gew% bezogen auf das Diisocyanat(gemisch), bevorzugt 15 bis 60 Gew% und besonders bevorzugt 20 bis 55 Gew%.

Bevorzugt sind aliphatische bzw. cycloaliphatische, im Rahmen dieser Schrift als (cyclo)aliphatisch zusammengefaßt, Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und Hexamethylendiisocyanat, insbesondere bevorzugt ist Hexamethylendiisocyanat.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Für die vorliegende Erfindung können sowohl solche Di- und Polyisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocy-anato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen oder sogar nicht meßbaren Anteil an chlorierten Verbindungen auf, was zu günstigen Farbzahlen der Produkte führt.

In einer Ausführungsform der vorliegenden Erfindung weisen die Di- und Polyisocyanate (A) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Di- und Polyisocyanate (A) mit einem höheren Chlorgehalt eingesetzt werden.

Weiterhin zu erwähnen sind
1) Isocyanuratgruppen aufweisende Polyisocyanate von aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiondiisocyanate mit aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können als alleinige Komponente oder im Gemisch mit anderen Polyisocyanaten, insbesondere den unter 1) genannten, eingesetzt werden.
3) Biuretgruppen aufweisende Polyisocyanate mit cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, *sek*-Butanol, *tert*-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,3-Propandiol, 2-Ethyl-1,3-Propandiol, 2-Methyl-1,3-Propandiol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butandiol, 3-Methylpentan-1,5-diol, 2-Ethylhexan-1,3-diol, 2,4-Diethyloctan-1,3-diol, Hydroxypivalinsäureneopentylglykolester, Ditrimethylolpropan, Dipentaerythrit, 2,2-Bis(4-hydroxycyclohexyl)propan, 1,1-, 1,2-, 1,3- und 1,4-Cyclohexandimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-polyisocyanat-Präpolymere, aus Di- und/oder Polyisocyanaten mit Alkoholen.
11) Polyharnstoff-Polyisocyanat-Präpolymere.

Die Polyisocyanate 1) bis 11) können im Gemisch, gegebenenfalls auch im Gemisch mit Diisocyanaten, eingesetzt werden.

Die Polyisocyanate (A) können auch zumindest teilweise in blockierter Form vorliegen.

Geeignete Gruppen zur Blockierung von Isocyanaten sind beschrieben in D. A. Wicks, Z. W. Wicks, Progress in Organic Coatings, 36, 148-172 (1999), 41, 1-83 (2001) sowie 43, 131-140 (2001).

Dies ist besonders dann bevorzugt, wenn die erfindungsgemäßen Beschichtungsmassen einkomponentig eingesetzt werden sollen.

Bevorzugte Verbindungen (A) sind die Urethane, Biurete und Isocyanurate, besonders bevorzugt die Isocyanurate von 1,6-Hexamethylendiisocyanat (HDI) oder 1-Isocyanato-3-isocyanatomethyl-3,5,5-trimethyl-cyclohexan, ganz besonders bevorzugt von 1,6-Hexamethylendiisocyanat.

Herstellbedingt können Polyisocyanate (A) noch einen geringen Anteil von dem ihnen zugrundeliegenden monomerem Diisocyanat aufweisen, beispielsweise bis zu 5 Gew%, besonders bevorzugt bis zu 3 Gew%, ganz besonders bevorzugt bis zu 2, insbesondere bis zu 1, speziell bis zu 0,5 und sogar bis zu 0,25 Gew%.

Bei der Verbindung (B) handelt es sich um mindestens eine Verbindung mit mindestens zwei, bevorzugt zwei bis vier, besonders bevorzugt zwei bis drei und ganz besonders bevorzugt genau zwei gegenüber Isocyanat reaktiven Gruppen, die mindestens eine Gruppe ausgewählt aus der Gruppe bestehend aus Thioethergruppen (-S-), Selanylgruppen (-Se-), Sulfoxidgruppen (-S(=O)-) und Sulfongruppen (-S(=O)₂- enthält.

Beispiele für gegenüber Isocyanat reaktive Gruppen in Verbindung (B)
sind -OH, -SH, -SeH, -NH₂ oder -NHR⁸, worin R⁸ Wasserstoff, Methyl, Ethyl, *iso*-Propyl, n-Propyl, n-Butyl, *iso*-Butyl, *sek*-Butyl oder *tert*-Butyl bedeuten kann. Bevorzugt handelt es sich bei den gegenüber Isocyanat reaktiven Gruppen in Verbindung (B) um -OH, -SH, oder -NHR⁸, besonders bevorzugt um -OH oder-SH und ganz besonders bevorzugt um -OH.

Die Verbindungen (B) weisen erfindungsgemäß mindestens eine, beispielsweise ein bis vier, bevorzugt ein bis drei, besonders bevorzugt ein bis zwei und ganz besonders bevorzugt genau eine Thioethergruppe (-S-) oder Selanylgruppe (-Se-) oder deren Oxidationsprodukte, besonders Sulfoxidgruppen (-S(=O)-) oder Sulfongruppen (-S(=O)₂-), auf.

Unter einer Thioethergruppe im Sinne der vorliegenden Anmeldung wird dabei eine Gruppierung -S- verstanden, die beidseitig von (cyclo)aliphatischen oder aromatischen Kohlenstoffen, bevorzugt von (cyclo)aliphatischen und besonders bevorzugt aliphatischen Kohlenstoffatomen substituiert ist. Mit "(cyclo)aliphatischen oder aromatischen Kohlenstoff" ist ein Kohlenstoffatom gemeint, das Bestandteil eines (cyclo)aliphatischen oder aromatischen Restes ist, der seinerseits wiederum mit gegenüber Isocyanat reaktiven Gruppen substituiert sein kann. In einer bevorzugten Ausführungsform sind beide (cyclo)aliphatischen oder aromatischen Reste mit genau einer gegenüber Isocyanat reaktiven Gruppe substituiert. Analoge Definitionen gelten für Selanylgruppen (-Se-), Sulfoxidgruppen (-S(=O)-) und Sulfongruppen (-S(=O)₂-).

In einer bevorzugten Ausführungsform ist die Komponente (B) ausgewählt aus der Gruppe bestehend aus Verbindungen der Formel 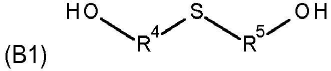 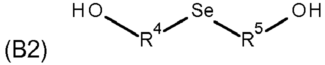 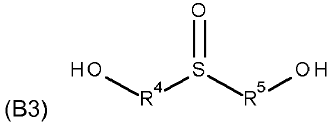 oder 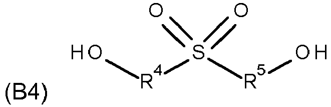 worin
R⁴ und R⁵ unabhängig voneinander jeweils C₁ - C₁₈-Alkylen, gegebenenfalls durch ein oder mehrere Sauerstoff- und/oder Schwefelatome unterbrochenes C₂ - C₁₈-Alkylen, C₆ - C₁₂-Arylen, C₅ - C₁₂-Cycloalkyl, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt handelt es sich bei R⁴ und R⁵ unabhängig voneinander jeweils C₁ - C₁₈-Alkylen, C₆ - C₁₂-Arylen oder C₅ - C₁₂-Cycloalkyl und besonders bevorzugt unabhängig voneinander jeweils C₁ - C₁₈-Alkylen und insbesondere C₂ - C₆-Alkylen, wobei die genannten Reste jeweils durch funktionelle Gruppen, Aryl, Alkyl, Aryloxy, Alkyloxy, Halogen, Heteroatome und/oder Heterocyclen substituiert sein können, besonders bevorzugt jedoch nicht substituiert sind.

Besonders bevorzugt sind R⁴ und R⁵ unabhängig voneinander ausgewählt aus der Gruppe bestehend aus 1,2-Ethylen, 1,2-Propylen, 1,3-Propylen, 1,4-Butylen, 1,5-Pentylen, 1,6-Hexylen, 2-Methyl-1,3-Propylen, 2-Ethyl-1,3-propylen, 2,2-Dimethyl-1,3-propylen, 2,2-Dimethyl-1,4-butylen, 3-Oxa-1,5-pentylen, 3,6-Dioxa-1,8-octylen, 3,6,9-Trioxa-1,11-undecylen, 1,1-, 1,2-, 1,3- oder 1,4-Cyclohexylen, 1,2- oder 1,3-Cyclopentylen, 1,2-, 1,3- oder 1,4-Phenylen und 4,4'-Biphenylen. Ganz besonders bevorzugt sind R⁴ und R⁵ unabhängig voneinander ausgewählt aus der Gruppe bestehend aus 1,2-Ethylen, 1,2-Propylen, 1,3-Propylen, 3-Oxa-1,5-pentylen und 1,4-Phenylen. Insbesondere handelt es sich bei R⁴ und R⁵ unabhängig voneinander um 1,2-Ethylen, 1,2-Propylen oder 1,3-Propylen und speziell um 1,2-Ethylen.

In einer bevorzugten Ausführungsform sind R⁴ und R⁵ jeweils gleich.

Unter den Verbindungen (B1) bis (B4) sind die Verbindungen (B1) bevorzugt.

Bevorzugt handelt es sich bei der Komponente (B) um 3-Thiapentan-1,5-diol (Thiodiglycol), 1,5-Dimethyl-3-Thiapentan-1,5-diol, 1-Methyl-3-Thiahexan-1,6-diol, 4-Thiaheptan-1,7-diol, 4,4'-Thio-bis(6-tert. butyl-m-cresol) und 4,4'-Dihydroxydiphenylsulfid, besonders bevorzugt um 3-Thiapentan-1,5-diol.

Der Gehalt an Komponente (B) im erfindungsgemäßen wasseremulgierbaren Polyisocyanat beträgt in der Regel 0,5 bis 15 Gew% bezogen auf Summe von (A), (B) und (C), bevorzugt 1 bis 10 Gew%, besonders bevorzugt 1,2 bis 7 und ganz besonders bevorzugt 1,5 bis 5 Gew%.

Bei der Komponente (C) handelt es sich um mindestens eine, beispielsweise ein bis drei, bevorzugt ein bis zwei und besonders bevorzugt genau eine Verbindung mit mindestens einer, bevorzugt ein oder zwei und besonders bevorzugt genau einer gegenüber Isocyanat reaktiven Gruppe und mindestens einer, bevorzugt genau einer dispergieraktiven Gruppe.

Dabei kann es sich bevorzugt um Verbindungen (C1) oder (C2) handeln.

Solche Verbindungen (C1) werden beispielsweise durch die allgemeine Formel

RG-R⁶-DG

dargestellt, worin
RG mindestens eine gegen Isocyanat reaktive Gruppe bedeutet,
DG mindestens eine dispergieraktive Gruppe und
R⁶ einen 1 bis 20 Kohlenstoffatome enthaltenden aliphatischen, cycloaliphatischen oder aromatischen Rest.

Beispiele für RG sind -OH, -SH, -NH₂ oder -NHR⁷, worin R⁷ Wasserstoff, Methyl, Ethyl, *iso-*Propyl, n-Propyl, n-Butyl, *iso*-Butyl, *sek*-Butyl oder *tert*-Butyl bedeuten kann.

DG kann entweder ionisch, beispielsweise anionisch oder kationisch, sein oder nichtionisch, bevorzugt anionisch oder nichtionisch und besonders bevorzugt nichtionisch.

Im Falle anionischer Gruppen sind Beispiele für DG -COOH, -SO₃H, -OPO₃H oder -PO₃H sowie deren anionischen Formen, denen ein beliebiges Gegenion assoziiert sein kann, z.B. Li⁺, Na⁺, K⁺, Cs⁺, Mg²⁺, Ca²⁺, Ba²⁺, Ammonium, Methylammonium, Dimethylammonium, Trimethylammonium, Ethylammonium, Diethylammonium, Triethylammonium, Tributylammonium, Di-*iso-*Propyl-ethyl-ammonium, Benzyldimethylammonium, Piperidinium, Piperazinium, N,N'-Dimethylpiperazinium, Dimethylcyclohexylammonium, Methyldicyclohexylammonium, Morpholinium oder Pyridinium, bevorzugt Li⁺, Na⁺, K⁺, Cs⁺, Mg²⁺, Ca²⁺, Ba²⁺, Ammonium, Methylammonium, Dimethylammonium, Trimethylammonium, Ethylammonium, Diethylammonium, Triethylammonium, Tributylammonium, Di-*iso*-Propyl-ethyl-ammonium, Benzyldimethylammonium, Piperidinium, Piperazinium, N,N'-Dimethylpiperazinium, Dimethylcyclohexylammonium, Methyldicyclohexylammonium, Morpholinium oder Pyridinium.
R⁶ kann z.B. Methylen, 1,2-Ethylen, 1,2-Propylen, 1,3-Propylen, 1,2-Butylen,
1,4-Butylen, 1,3-Butylen, 1,6-Hexylen, 1,8-Octylen, 1,12-Dodecylen, 1,2-Phenylen,
1,3-Phenylen, 1,4-Phenylen, 1,2-Naphthylen, 1,3-Naphthylen, 1,4-Naphthylen,
1,6-Naphthylen, 1,2-Cyclopentylen, 1,3-Cyclopentylen, 1,2-Cyclohexylen, 1,3-Cyclohexylen oder 1,4-Cyclohexylen sein.

Bevorzugt handelt es sich bei solch einer anionischen Komponente (C1) z.B. um Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, am Ring mit Alkyl substituierte Aminobenzolsulfonsäuren, wie beschrieben in WO 2009/010469, Aminonaphthalincarbonsäure, Hydroxyethansulfonsäure, Hydroxypropansulfonsäure, Mercaptoethansulfonsäure, Mercaptopropansulfonsäure, Aminomethansulfonsäure, Taurin, Aminopropansulfonsäure, N-Alkyl-, -Cycloalkyl- oder -Aryl-substituierte Aminomethansulfonsäuren oder Aminopropansulfonsäure, sowie deren Alkali-, Erdalkali- oder Ammoniumsalze und besonders bevorzugt um die genannten Monohydroxycarbon- und -sulfonsäuren sowie Monoaminocarbon- und -sulfonsäuren, besonders bevorzugt 4-Aminotoluol-2-sulfonsäure, N-Cyclohexyl-2-aminoethansulfonsäure und N-Cyclohexylamino-3-propansulfonsäure.

Zur Herstellung werden die vorgenannten Säuren, falls es sich nicht schon um Salze handelt, teilweise oder vollständig neutralisiert, bevorzugt mit Alkalisalzen oder Aminen, bevorzugt tertiären Aminen.

Verbindungen (C1) mit kationischen Gruppen DG können mindestens eine gegenüber Isocyanatgruppen reaktive Gruppe und mindestens eine kationische oder in eine kationische Gruppe überführbare hydrophile Gruppe enthalten und sind beispielsweise solche, wie sie in der EP-A1 582 166, dort besonders von S. 5, Z. 42 bis S. 8, Z. 22 und insbesondere von S. 9, Z. 19 bis S. 15, Z. 34, oder in der EP-A1 531 820, dort besonders von S. 3, Z. 21 bis S. 4, Z. 57 oder in DE-A1 42 03 510, dort besonders von S. 3, Z. 49 bis S. 5, Z. 35 beschrieben sind. Auf diese Schriften wird im Rahmen der vorliegenden Offenbarung hiermit ausdrücklich Bezug genommen.

Verbindungen (C1) können mindestens eine, bevorzugt genau eine gegenüber Isocyanatgruppen reaktive Gruppe und mindestens eine, bevorzugt genau eine anionische oder in eine anionische Gruppe überführbare hydrophile Gruppe enthalten und sind beispielsweise solche, wie sie in der EP-A1 703 255, dort besonders von S. 3, Z. 54 bis S. 4, Z. 38, in der DE-A1 197 24 199, dort besonders von S. 3, Z. 4 bis Z. 30, in der DE-A1 40 10 783, dort besonders von Sp. 3, Z. 3 bis Z. 40, in der DE-A1 41 13 160, dort besonders von Sp. 3, Z. 63 bis Sp. 4, Z. 4, in der WO 2009/010469 A1, dort besonders von S. 8, Z. 41 bis S. 11, Z. 17 und in der EP-A2 548 669, dort besonders von S. 4, Z. 50 bis S. 5, Z. 6 beschrieben sind. Auf diese Schriften wird im Rahmen der vorliegenden Offenbarung hiermit ausdrücklich Bezug genommen.
Bevorzugte Verbindungen (C1) sind solche, in denen DG eine nichtionische Gruppe ist. Diese bevorzugten Verbindungen (C1) enthalten mindestens eine, bevorzugt genau eine gegenüber Isocyanatgruppen reaktive Gruppe und mindestens eine, bevorzugt genaue eine nichtionische hydrophile Gruppe.

Bei dieser hydrophilen Gruppe handelt es sich um mindestens einen mindestens 7, bevorzugt mindestens 10 Ethylenoxidgruppen aufweisenden Monoalkohol.

In der Regel enthält die Komponente (C1) nicht mehr als 30 Ethylenoxidgruppen, bevorzugt nicht mehr als 25 und besonders bevorzugt nicht mehr als 20 Ethylenoxidgruppen.

Unter Ethylenoxidgruppen werden dabei Gruppen -CH₂-CH₂-O- verstanden, die sich wiederholend in der Komponente (C1) eingebaut sind.

Als Monoole, deren ethoxylierte Produkte als Komponenten (C1) eingesetzt werden könnn, kommen in Betracht Methanol, Ethanol, iso-Propanol, n-Propanol, n-Butanol, iso-Butanol, sek-Butanol, tert-Butanol, n-Hexanol, n-Heptanol, n-Octanol, n-Decanol, n-Dodecanol (Laurylalkohol), 2-Ethylhexanol, Cyclopentanol, Cyclohexanol, Cyclooctanol und Cyclododecanol. Bevorzugt sind die genannten C₁ bis C₄-Alkanole, besonders bevorzugt ist Methanol.

Besonders bevorzugte Verbindungen (C1) sind Polyalkylenoxidpolyetheralkohole, die erhältlich sind durch Alkoxylierung von Monohydroxyverbindungen der allgemeinen Formel

R¹-O-H

oder sekundären Monoaminen der allgemeinen Formel

R²R³N-H,

in welchen
R¹, R² und R³ unabhängig voneinander unabhängig voneinander jeweils C₁ - C₁₈-Alkyl, gegebenenfalls durch ein oder mehrere Sauerstoff- und/oder Schwefelatome unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R² und R³ gemeinsam einen ungesättigten, gesättigten oder aromatischen und gegebenenfalls durch ein oder mehrere Sauerstoff- und/oder Schwefelatome unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt ist R¹ C₁- bis C₄-Alkyl, d.h. Methyl, Ethyl, *iso*-Propyl, n-Propyl, n-Butyl, *iso*-Butyl, *sek-*Butyl oder *tert*-Butyl, besonders bevorzugt ist R¹ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Bevorzugte Verbindungen (C1) sind Polyetheralkohole auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel 7 bis 30, vorzugsweise 7 bis 25, besonders bevorzugt 7 bis 20, ganz besonders bevorzugt 10 bis 20 Ethylenoxideinheiten pro Molekül auf.

Bevorzugte Polyetheralkohole (C1) sind somit Verbindungen der Formel

R¹-O-[-Xᵢ-]ₖ-H

worin
R¹ die oben genannten Bedeutungen hat,
k für eine ganze Zahl von 7 bis 30, besonders bevorzugt 7 bis 25 und insbesondere 10 bis 20 steht und
jedes Xᵢ für i = 1 bis k für -CH₂-CH₂-O- steht.

Die Polyetheralkohole können in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponenten enthalten. Dies ist jedoch weniger bevorzugt.

Bei Verbindungen (C2) handelt es sich um Phosphorsäureester der Formeln (Ia) oder (Ib) oder deren Mischungen: 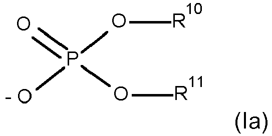 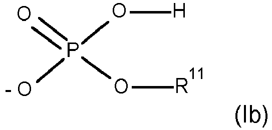 worin
R¹⁰ und R¹¹ unabhängig voneinander Alkyl, bevorzugt C₁- bis C₂₀-Alkyl, Cycloalkyl, bevorzugt C₄-bis C₈-Cycloalkyl, Aryl, bevorzugt C₆- bis C₁₀ Aryl, oder Aralkyl, bevorzugt C₇- bis C₁₅-Aralkyl, bedeuten können.

Die Gruppen R¹⁰ und R¹¹ können auch durch Heteroatome wie O, N, oder S unterbrochen sein, sollen jedoch keine mit Isocyanat reaktiven Gruppen wie z.B. NH, OH, SH, COOH tragen.

Bevorzugte Verbindungen (C2) sind Monomethylphosphat, Dimethylphosphat, Monoethylphosphat, Diethylphosphat, Mono-n-butyl-phosphat, Di-n-butyl-phosphat, Mono-2-ethylhexyl-phosphat, Di-2-ethylhexyl-phosphat und deren Gemische.

Besonders bevorzugt leiten sich die Reste R¹⁰ und R¹¹ von Fettsäurealkoholen oder alkoxylierten Fettsäurealkoholen ab und stehen beispielsweise für solche der allgemeinen Formel (II)

R¹²-O-[-Xᵢ-]ₙ-

worin
R¹²C₁- bis C₂₀-Alkyl,
n 0 (Null) oder eine positive ganze Zahl von 1 bis 20 und
jedes Xᵢ für i = 1 bis n unabhängig voneinander ausgewählt sein kann aus der Gruppe bestehend aus -CH₂-CH₂-O-, -CH₂-CH(CH₃)-O- und -CH(CH₃)-CH₂-O- sein kann.

Werden die Verbindungen der Formeln (la) und (Ib) als Gemische eingesetzt, so werden sie bevorzugt in einem molaren Verhältnis zwischen Monoester (Ib) und Diester (la) von 5:95 bis 95:5, bevorzugt von 20:80 bis 80:20, besonders bevorzugt von 30:70 bis 70:30 und insbesondere von 33:67 bis 67:33 eingesetzt.

Es wird vermutet, daß bei Umsetzung von Isocyanaten mit derartigen Phosphorsäureestern jeweils eine der Hydroxygruppen der Phosphorsäureester mit den NCO-Gruppen des Isocyanats in einer Additionsreaktion unter Ausbildung einer kovalenten Bindung reagiert.

Unter den Verbindungen (C1) und (C2) sind die Verbindungen (C1) bevorzugt.

Zur Herstellung der wasseremulgierbaren Polyisocyanate wird zumindest ein Teil, bevorzugt die vollständige Menge der Ausgangskomponente (A) bei Temperaturen von 40 bis 180°C, vorzugsweise 50 bis 150°C, mit zumindest einem Teil, bevorzugt der Gesamtmenge der Verbindung (B) und/oder (C) umgesetzt.

Die Umsetzung erfolgt unter Einhaltung eines Äquivalentverhältnisses von NCO-Gruppen zu gegenüber Isocyanat reaktiven Gruppen (Summe in (B) und (C)) von mindestens 5 : 1, bevorzugt mindestens 7:1 und besonders bevorzugt mindestens 10:1 sowie bis zu 100:1, bevorzugt bis zu 50:1, besonders bevorzugt bis zu 30:1, ganz besonders bevorzugt bis zu 25:1 und insbesondere bis zu 18:1.

Es ist auch möglich, wenn auch weniger bevorzugt, Ausgangskomponente (A) zunächst zumindest teilweise mit (B) und erst anschließend mit (C) umzusetzen, oder umgekehrt, Ausgangskomponente (A) zunächst zumindest teilweise mit (C) und erst anschließend mit (B) umzusetzen. Bevorzugt ist jedoch die gleichzeitige Umsetzung von (A), (B) und (C).

Das Reaktionsgemisch wird mit der Komponente (C) in einer solchen Menge umgesetzt, daß das Endprodukt einen Gehalt an Ethylenoxidgruppen, berechnet als 44 g/mol, bezogen auf die Summe der Komponenten (A), (B) und (C) von mindestens 12 Gew% aufweist, bevorzugt mindestens 14 und besonders bevorzugt mindestens 15 Gew%. Der Gehalt an Ethylenoxidgruppen überschreitet in der Regel nicht 25 Gew%, bevorzugt nicht mehr als 23, besonders bevorzugt nicht mehr als 20 Gew%.

Die Reaktionsdauer beträgt in der Regel 10 min bis 5 Stunden, bevorzugt 15 min bis 4 Stunden, besonders bevorzugt 20 bis 180 min und ganz besonders bevorzugt 30 bis 120 min.

Zur Beschleunigung der Reaktion können gegebenenfalls geeignete Katalysatoren eingesetzt werden.

Die Umsetzung wird bevorzugt durch Zugabe eines geeigneten Katalysators beschleunigt. Solche Katalysatoren sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren", bevorzugt sind organische Amine, insbesondere tertiäre aliphatische, cycloaliphatische oder aromatische Amine, Brønsted-Säuren und/oder Lewis-saure Organometallverbindungen, besonders bevorzugt sind Lewis-saure Organometallverbindungen.

Weitere Metallkatalysatoren werden von Blank et al. in Progress in Organic Coatings, 1999, Vol. 35, Seiten 19-29 beschrieben.

Geeignete Katalysatoren sind insbesondere Zinkverbindungen, wie z. B. Zink-(II)-stearat, Zink(II)-n-octanoat, Zink-(II)-2-ethyl-1-hexanoat, Zink-(II)-naphthenat oder Zink-(II)-acetylacetonat, Zinnverbindungen, wie z. B. Zinn(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(acetoacetat), Eisen-(III)-chlorid, Kaliumoctoat, Mangan-, Cobalt-, Wismut-, Zn-(II)-, Zr-(IV) oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Bevorzugte Katalysatoren für das erfindungsgemäße Verfahren sind Zinkverbindungen der obengenannten Art. Ganz besonders bevorzugt ist die Verwendung von Zink-(II)-n-octanoat, Zink-(II)-2-ethyl-1-hexanoat und/oder Zink-(II)-stearat.

Auch Metallkomplexe wie Acetylacetonate des Eisens, Titans, Aluminiums, Zirkons, Mangans, Nickels, Zinks und Cobalts sind möglich.

Als Zinn- und Zink-freie Alternativen werden u.a. Zirkonium-, Wismut-, Titan- und AluminiumVerbindungen eingesetzt. Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Aluminiumdionat (z.B. K-KAT® 5218 der Firma King Industries).

Als Zink- und Wismutverbindungen kommen dabei solche in Betracht, in denen folgende Anionen eingesetzt werden: F⁻, Cl⁻, ClO⁻, ClO₃⁻, ClO₄⁻, Br⁻, J-, JO₃⁻, CN⁻, OCN-, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻ H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei die Carboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Verbindungen weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat, Neodekanoat und 2-Ethylhexanoat.

Unter den Zink-Katalysatoren sind die Zinkcarboxylate bevorzugt, besonders bevorzugt solche von Carbonsäuren, die mindestens zwei und bis zu zwölf Kohlenstoffatome aufweisen, insbesondere Zink-(II)-diacetat oder Zink-(II)-dioctoat oder Zink-(II) neodecanoat. Handelsübliche Katalysatoren sind beispielsweise Borchi® Kat 22 von OMG Borchers GmbH, Langenfeld, Deutschland.

Unter den Wismut-Katalysatoren sind die Wismutcarboxylate bevorzugt, besonders bevorzugt solche von Carbonsäuren, die mindestens zwei und bis zu zwölf Kohlenstoffatome aufweisen, insbesondere Wismutoctoate, -2-ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland.

Es kann sich dabei auch um Gemische verschiedener Metalle handeln, wie beispielsweise in Borchi® Kat 0245 von OMG Borchers GmbH, Langenfeld, Deutschland

Unter den Titanverbindungen sind die Titan-tetra-alkoholate Ti(OR)₄ bevorzugt, besonders bevorzugt solche von Alkoholen ROH mit 1 bis 8 Kohlenstoffatomen, beispielsweise Methanol, Ethanol, *iso*-Propanol, n-Propanol, n-Butanol, *iso*-Butanol, *sek*-Butanol, *tert*-Butanot, n-Hexanol, n-Heptanol, n-Octanol, bevorzugt sind Methanol, Ethanol, *iso*-Propanol, n-Propanol, n-Butanol, *tert*-Butanol, besonders bevorzugt sind iso-Propanol und n-Butanol.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.

Die Polyaddition zur Herstellung der Polyurethanzubereitung kann besonders bevorzugt in Anwesenheit von Cäsiumsalzen erfolgen, wie in DE 10161156 beschrieben. Bevorzugte Cäsiumsalze sind dabei Verbindungen, in denen folgende Anionen eingesetzt werden: F⁻, Cl⁻, ClO⁻, ClO₃⁻, ClO₄⁻ , Br⁻, J⁻, JO₃⁻, CN⁻, OCN⁻, NO₂⁻ NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPOₐ²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente (A), (B) und/oder der Komponente (C) vor Beginn der eigentlichen Umsetzung zuzumischen. Ebenso ist es möglich, den Katalysator dem Reaktionsgemisch zu einem beliebigen Zeitpunkt während der Reaktion zuzusetzen.

In einer bevorzugten Ausführungsform der vorliegenden Erfindung sind die Komponenten (B) und (C) überwiegend über Urethangruppen gebunden, wohingegen die Bindung über Allophanatgruppen den geringeren Teil ausmachen soll.

Bezogen auf die mit einem Isocyanat reagierten Hydroxygruppen in den Komponenten (B) und (C) sind bevorzugt mehr als 50 mol% über Urethangruppen gebunden, besonders bevorzugt mindestens 60 mol%, ganz besonders bevorzugt mindestens 66 mol%, insbesondere mindestens 75 mol%, speziell mindestens 80 mol% und sogar mindestens 90 mol%.

Die Reaktionsbedingungen werden dementsprechend bevorzugt so gewählt, daß im Produkt weniger als 10 mol% der Hydroxygruppen in den Komponenten (B) und (C) über Allophanatgruppen gebunden sind. Dies kann beispielsweise dadurch erreicht werden, daß man solche Reaktionsbedingungen vermeidet, wie sie in EP 959087 A1 zum Erzielen eines hohen Allophanatgehalts beschrieben sind.

Dies kann bevorzugt erreicht werden, indem man unter den genannten Katalysatoren solche auswählt, die in lediglich geringem Ausmaß Allophanatgruppen bilden.

Insbesondere kann die Bildung von Allophanatgruppen gering gehalten werden, indem man in Anwesenheit eines Katalysators die Reaktionstemperatur bei nicht mehr als 90°C, bevorzugt nicht mehr als 85 und besonders bevorzugt bei nicht mehr als 80°C hält.

Der Verlauf der Umsetzung kann durch z. B. titrimetrische Bestimmung des NCO-Gehaltes verfolgt werden. Nach Erreichen des angestrebten NCO-Gehaltes wird die Reaktion abgebrochen. Dies kann bei rein thermischer Reaktionsführung beispielsweise durch Abkühlen des Reaktionsgemisches auf Raumtemperatur erfolgen. Bei der Verwendung eines Katalysators der genannten Art wird die Umsetzung im allgemeinen aber durch Zugabe geeigneter Desaktivatoren abgestoppt. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, Benzoylchlorid, Dimethylsulfat und vorzugsweise Dibutylphosphat sowie Di-2-ethylhexylphosphat. Die Desaktivierungsmittel können in Mengen von 1 bis 200 Mol-%, vorzugsweise 20 bis 100 Mol-%, bezogen auf die Mole an Katalysator, eingesetzt werden.

Die resultierenden Polyisocyanatgemische weisen in der Regel einen NCO-Gehalt von vorzugsweise 14,0 bis 20,0 Gew.-%, besonders bevorzugt 15,0 bis 19,0 Gew.-% auf.

Die resultierenden Polyisocyanatgemische weisen in der Regel eine Viskosität bei 23 °C von 2,5 bis 12 Pas, besonders bevorzugt 3 bis 8 Pas auf.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren kann gegebenenfalls in einem geeigneten, gegenüber Isocyanatgruppen inerten Lösemittel (D) durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, iso-Butylmethylketon, 4Methyl-2-pentanon, Cyclohexanon, Cyclopentanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol® im Handel sind, Propylenglykoldiacetat, Diethylenglykoldimethylether, Dipropylenglykoldimethylether, Diethylenglykolethyl- und -butyletheracetat, N-Methylpyrrolidon, N-Ethylpyrrolidon und N-Methylcapro-lactam, sowie bevorzugt Kohlensäureester oder Lactone, die in der EP-A1 697 424, S. 4, Z. 4 bis 32 genannt sind, besonders bevorzugt Dimethylcarbonat, Diethylcarbonat, 1,2-Ethylen-carbonat und 1,2-Propylencarbonat, Lactone, wie β-Propiolacton, γ-Butyrolacton, ε-Caprolacton und ε-Methylcaprolacton, oder auch beliebige Gemische solcher Lösemittel.

Es ist auch möglich, die Herstellung der Isocyanate zunächst ohne Lösemittel durchzuführen und das so erhältliche Produkt anschließend in einem Lösemittel (D) aufzunehmen.

Das Lösungsmittel (D) kann bezogen auf die Gesamtmischung (Summe der Komponenten (A), (B) und (C)) in Mengen von 0 bis 60 Gew% anwesend sein, bevorzugt in Mengen von 0 bis 50 Gew%.

Die Mischungen können vorzugsweise in Wasser zur Herstellung wäßriger Dispersionen dispergiert werden, besonders bevorzugt werden die Mischungen in wäßrige Dispersionen eingemischt.

Die Polyisocyanatzubereitung eignet sich zur Modifizierung von wäßrigen Beschichtungsmitteln (Lack, Schutzüberzüge) für z.B. Holz, Holzfurnier, Papier, Pappe, Karton, Textil, Leder, Vlies, Kunststoffoberflächen, Glas, Keramik, mineralische Baustoffe wie Zement-Formsteine und Faserzementplatten, Metalle oder beschichtete Metalle, Klebstoff oder Imprägnierungsmittel, z.B. zum Färben, auf Basis von wäßrigen Dispersionen oder Lösungen eines Feststoffgehaltes von 5 bis 60 Gew.%, vorzugsweise von 5 bis 50 Gew.%. Als Beschichtungsmittel kommen die an sich bekannten wäßrigen Dispersionen von Homo- und Copolymerisaten olefinisch ungesättigter Monomerer oder Polyurethanen oder auch Lösungen von Naturstoffen, wie z.B. von Casein, in Betracht.

Die Polyisocyanatzubereitungen können als Vernetzungskomponenten in wässrigen Dispersionen verwendet werden.

Die Polyisocyanatzubereitungen werden den wäßrigen Beschichtungsmitteln im allgemeinen in einer Menge von 1 bis 25, vorzugsweise von 2,5 bis 20 Gew-%, bezogen auf den Feststoffgehalt des Beschichtungsmittels, zugesetzt.

Dabei können die Polyisocyanatzubereitungen sowohl in einkomponentige Beschichtungsmassen, beispielsweise in Form von Polyurethandispersionen, oder im Gemisch mit einem hydroxygruppenhaltigen Bindemittel als Zweikomponenten-Polyurethanbeschichtungsmasse eingesetzt werden

Sie werden in bekannter Weise durch z.B. Spritzen in einer Menge von 5 bis 500 g Feststoff/m² auf das Substrat aufgebracht.

Geeignete Dispersionen von Homo- oder Copolymerisaten olefinisch ungesättigter Monomerer sind z.B. an sich bekannte Dispersionen von Homo- oder Copolymerisaten auf Basis von Vinylestern von Carbonsäuren mit 2 bis 18, vorzugsweise 2 bis 4 Kohlenstoffatomen wie insbesondere Vinylacetat, gegebenenfalls mit bis zu 70 Gew.% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4 Kohlenstoffatomen wie insbesondere (Meth)Acrylsäure-, -methyl-, -ethyl-, -propyl-, -n-butyl-, -hydroxyethyl- oder -hydroxypropylestern, gegebenenfalls zusammen mit bis zu 70 Gew.% an anderen olefinisch ungesättigten Monomeren und/ oder Butadien-Styrol-Copolymerisaten mit einem Gehalt an Butadien von ca. 20 bis 60 Gew-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wäßrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew.%, insbesondere eines Chlorgehalts von ca. 36 Gew%.

Bevorzugt werden wäßrige Dispersionen von Copolymerisaten aus 90 bis 99,5 Gew% Acrylaten oder Methacrylaten von 1 bis 4 C-Atomen enthaltenden Alkanolen und 0,5 bis 10 Gew%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolymerisation herstellbar (s. Houben-Weyl, Methoden der organischen Chemie, 4. Auflage, Bd. E 20, S.217 ff.).

Geeignete wäßrige Polyurethandispersionen sind solche der an sich bekannten Art, wie sie z.B. in US-A 3 479 310, GB-A 1 076 688, US-A 4 108 814, US-A 4 092 286, DE-A 2 651 505, US-A 4 190 566, DE-A 2 732 131 oder DE-A 2 811 148 beschrieben sind.

Die eingesetzten wäßrigen Dispersionen können die üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexametaphosphat, Naphthalinsulfonsäure, Ammonium- oder Natriumpolyacrylsäuresalzen eingesetzt werden, wobei die Netzmittel im allgemeinen in Mengen von 0,2 bis 0,6 Gew%, bezogen auf Füllstoff, zugesetzt werden.

Weitere geeignete Hilfsmittel sind z.B. in Mengen von 0,01 bis 1 Gew.%, bezogen auf die Dispersion, einzusetzende organische Verdickungsmittel wie z.B. Zellulose-Derivate, Alginate, Stärke oder Stärkederivate oder Polyacrylsäure oder in Mengen von 0,05 bis 5 Gew.%, bezogen auf die Dispersion, einzusetzende anorganische Verdickungsmittel, wie z.B. Bentonite, oder organische Verdickungsmittel, wie z.B. Polyurethanverdicker.

Auch Fungizide zur Konservierung können den Dispersionen zugesetzt werden. Diese kommen im allgemeinen in Mengen von 0,02 bis 1 Gew.-%, bezogen auf die Dispersion, zum Einsatz. Geeignete Fungizide sind beispielsweise Phenol- und Kresol-Derivate oder Zinn-organische Verbindungen.

Substrate für Imprägnierungen sind z.B. synthetische oder nichtsynthetische Fasern bzw. deren Gewebe oder Vliese.

Die Mischungen können sehr feinteilig in wäßrigen Dispersionen dispergiert werden. Die erhaltenen Dispersionen sind sehr lagerstabil. Darüber hinaus benötigt man weniger Zusatzmenge des wasseremulgierbaren Polyisocyanats um die gewünschten Eigenschaften der Dispersion einzustellen bzw. bei der Anwendung zu erreichen.

Die Mischungen können selbstverständlich mit üblichen Hilfs- und Zusatzmitteln der Lacktechnologie versetzt werden. Hierzu gehören beispielsweise Entschäumer, Verdicker, Verlaufshilfsmittel, Pigmente, Emulgatoren, Dispergierhilfsmittel und auch Lösemittel. Die gewünschte Verarbeitungsviskosität wird durch Zugabe von Wasser eingestellt.

Zur Herstellung der Dispersionen reichen in den meisten Fällen einfache Emulgiertechniken, z.B. mit einem mechanischen Rührer, oder oftmals auch eine einfache Mischung der beiden Komponenten per Hand aus, um Dispersionen mit sehr guten Eigenschaften zu erzielen. Selbstverständlich können aber auch Mischtechniken mit höherer Scherenergie, wie z.B. Strahldispergierung, eingesetzt werden.

Die die Mischungen enthaltenden Beschichtungsmittel können insbesondere als Grundierungen, Füller, pigmentierte Decklacke und Klarlacke im Bereich Autoreparatur- oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die die Mischungen enthaltenden Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren appliziert werden.

Die Trocknung und Aushärtung der Beschichtungen erfolgt im allgemeinen unter normalen Temperaturbedingungen, d.h. ohne Erhitzung der Beschichtung. Die Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

### Polyisocyanat A1:

HDI-Isocyanurat mit einem NCO-Gehalt von 22,2% und einer Viskosiät gemäß DIN EN ISO 3219/A.3 (Oktober 1994) von 2800 mPa*s bei 23°C (kommerziell erhältlich als Basonat® HI 100 der BASF SE, Ludwigshafen).

### Polyether C1-1:

Auf Methanol gestartetes und unter Kaliumhydroxidkatalyse hergestelltes monofunktionelles Polyethylenoxid mit einer OH-Zahl von 112 (nach DIN 53240, Juni 2013) und einem Molekulargewicht von 500 g/mol. Die noch anwesenden basischen Katalysatorreste wurden anschließend mit Essigsäure neutralisiert und das Produkt entsalzt. Hierbei wird auch gebildetes Kaliumacetat entfernt.

### Diol (B1-1)

- Thiodyglycol HP (der BASF SE, Ludwigshafen)

### Diole (Vergleich)

- 1,5 Pentandiol
- Diethylenglycol

### Beispiele 1 bis 3, Vergleichsbeispiele 4 bis 7:

Es wurden 100g Polyisocyanat A1, die in der Tabelle angegebene Menge Polyether C1-1 und die in der Tabelle angegebene Menge des angegebenen Diols vermischt, aufgeheizt und miteinander umgesetzt. Nach 3 Stunden bei 90°C wurde die Reaktion bei Erreichen des angegebenen NCO-Gehaltes abgebrochen, der der vollständigen Bildung des Urethans entspricht. Das entsprechende Produkt hatte eine Viskosität bei 23°C, wie in der Tabelle angegeben.

| Beispiel | Polyisocyanat Menge (g) | Polyether Menge (g) | Diol Menge (g) | NCO Gehalt (%) | Viskosität (mPa.s) |
|---|---|---|---|---|---|
| 1 | 100 | 17,6 | 2,0g Thiodiglycol | 15,8 | 5500 |
| 2 | 100 | 17,6 | 2,5g Thiodiglycol | 15,0 | 8200 |
| 3 | 100 | 17,6 | 3,7g Thiodiglycol | 14,2 | 14600 |
| 4 (Vgl.) | 100 | 17,6 | 0 | 17,0 | 2950 |
| 5 (Vgl.) | 100 | 17,6 | 3,1g 1,5-Pentandiol | 14,2 | 13200 |
| 6 (Vgl.) | 100 | 17,6 | 3,2g Diethylenglycol | 14,1 | 22500 |
| 7 (Vgl.) | 100 | 48,4 | 0 | 11,2 | 3850 |

### Anwendungsbeispiele

100 g Luhydran® S938T (acrylat-basiertes wäßriges Polyol, kommerziell erhältlich von der BASF SE, Ludwigshafen, OH-Zahl 100 mg KOH/g, 45%ig in Wasser) wurden mit 2,5 g Butyldiglycol acetat und 6,7 g Butylgylcolacetat als Filmbildehilfsmittel vermischt. Der pH des Gemisches wurde mit Hilfe von 0,9 g einer 50 %igen Lösung von Dimethylethanolamin in Wasser auf 8,5 eingestellt. Die Applikationsviskosität wurde angepaßt mittels 7,8 g Wasser und 0,52 g BYK® 340 (Fa. BYK, polymerer Fluoroentschäumer) Entschäumer.

Die Polyisocyanate aus der obigen Tabelle wurden mit Dipropylenglycoldimethylether auf einen Festkörpergehalt von 80% verdünnt.

Diese Lösungen der Polyisocyanate wurden in einer Menge, die 1 NCO auf 1 OH des Luhydrans® S938T entsprach, zu 45g der Formulierung des Polyols gegeben, die Mischung wurde per Hand für 20 Sekunden mit einem Holzspatel bei 140 bis 180 Umdrehungen pro Minute gerührt.
Anschließend wurden mit einem Rakel Filme auf Karton mit eine Naßschichtdicke von 150 µm aufgezogen.

Der Glanz wurde nach Härtung für 30 Minuten bei 60 °C in einem Winkel von 20° mit einem micro-TRI-gloss µ Apparat von BYK bestimmt.

| Beispiel | Glanz (20°) |
|---|---|
| 1 | 54,6 |
| 2 | 59,4 |
| 3 | 71,8 |
| 4 (Vergleich) | 43,8 |
| 5 (Vergleich) | 51,0 |
| 6 (Vergleich) | 56,9 |
| 7 (Vergleich) | 49,6 |

Der Vergleich der Beispiele 1 bis 3 mit dem Vergleichsbeispiel 4 (gleiche Menge an Polyether) zeigt eine deutliche Verbesserung des Glanzes bei Einsatz der erfindungsgemäßen Polyisocyanate.

In den Beispielen 3, 5 und 6 wurde die gleiche molare Menge verschiedener Diole mit gleicher Kettenlänge eingesetzt. Man sieht auch hier eine deutliche Verbesserung des Glanzes durch Einsatz der Komponente (B) in den erfindungsgemäßen Polyisocyanaten.

In Beispiel 3 und Vergleichsbeispiel 7 wurden gleiche molare Mengen von OH-Komponenten eingesetzt, die in Vergleichsbeispiel 7 ausschließlich aus dem Polyether stammen unter Verzicht auf die erfindungsgemäße Komponente (B). Man sieht auch hier eine deutliche Verbesserung des Glanzes durch Einsatz der Komponente (B) in den erfindungsgemäßen Polyisocyanaten.

## Patentansprüche

1. Wasseremulgierbare Polyisocyanate, enthaltend
(A) mindestens ein Polyisocyanat auf Basis mindestens eines (cyclo)aliphatischen Diisocyanates,
(B) mindestens eine Verbindung (B) mit mindestens zwei, bevorzugt zwei bis vier, besonders bevorzugt zwei bis drei und ganz besonders bevorzugt genau zwei gegenüber Isocyanat reaktiven Gruppen, die mindestens eine Gruppe ausgewählt aus der Gruppe bestehend aus Thioethergruppen (-S-), Selanylgruppen (-Se-), Sulfoxidgruppen (-S(=O)-) und Sulfongruppen (-S(=O)₂-) enthält,
(C) mindestens eine Verbindung mit mindestens einer gegenüber Isocyanat reaktiven Gruppe und mindestens einer dispergieraktiven Gruppe, und
(D) gegebenenfalls Lösungsmittel, wobei
- das Verhältnis von NCO-Gruppen in (A) zu gegenüber Isocyanat reaktiven Gruppen in (B) und (C) von mindestens 5:1 bis 100:1 beträgt,
- der Gehalt an Ethylenoxidgruppen, berechnet als 44 g/mol, bezogen auf die Summe von (A), (B) und (C) mindestens 12 Gew%, bevorzugt mindestens 14, besonders bevorzugt mindestens 15 Gew% beträgt,
- der Gehalt an Komponente (C), bezogen auf (A) mindestens 5 und bis zu 25 Gew% beträgt, und
- die Viskosität bei 23 °C gemäß DIN EN ISO 3219/A.3 (Oktober 1994) in einem Kegel-Platte-System mit einem Geschwindigkeitsgefälle von 1000 s⁻¹ von 2500 mPas bis 12000 mPas beträgt.

2. Wasseremulgierbare Polyisocyanate gemäß Anspruch 1, **dadurch gekennzeichnet, daß** das (cyclo)aliphatische Diisocyanat ausgewählt ist aus der Gruppe bestehend aus Hexamethylendiisocyanat, 1,3-Bis(isocyanatomethyl)cyclohexan, Isophorondiisocyanat, 4,4'- Di(isocyanatocyclohexyl)methan und 2,4'-Di(isocyanatocyclohexyl)methan.

3. Wasseremulgierbare Polyisocyanate gemäß Anspruch 1, **dadurch gekennzeichnet, daß** es sich bei dem Polyisocyanat um ein Isocyanurat von 1,6-Hexamethylendiisocyanat handelt.

4. Wasseremulgierbare Polyisocyanate gemäß einem der vorstehenden Ansprüche, **dadurch gekennzeichnet, daß** Komponente (B) ausgewählt ist aus der Gruppe bestehend aus Verbindungen der Formel 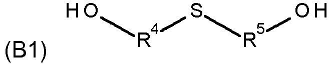 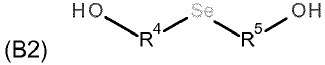 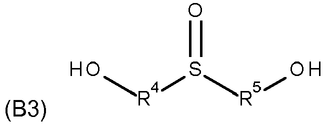 oder 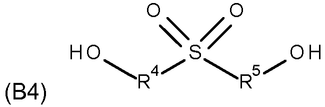 worin
R⁴ und R⁵ unabhängig voneinander jeweils C₁ - C₁₈-Alkylen, gegebenenfalls durch ein oder mehrere Sauerstoff- und/oder Schwefelatome unterbrochenes C₂ - C₁₈-Alkylen, C₆ - C₁₂-Arylen, C₅ - C₁₂-Cycloalkyl, wobei die genannten Reste jeweils durch funktionelle Gruppen, Aryl, Alkyl, Aryloxy, Alkyloxy, Halogen, Heteroatome und/oder Heterocyclen substituiert sein können.

5. Wasseremulgierbare Polyisocyanate gemäß Anspruch 4, **dadurch gekennzeichnet, daß** R⁴ und R⁵ unabhängig voneinander ausgewählt sind aus der Gruppe bestehend aus 1,2-Ethylen, 1,2-Propylen, 1,3-Propylen, 1,4-Butylen, 1,5-Pentylen, 1,6-Hexylen, 2-Methyl-1,3-Propylen, 2-Ethyl-1,3-Propylen, 2,2-Dimethyl-1,3-Propylen, 2,2-Dimethyl-1,4-butylen, 3-Oxa-1,5-pentylen, 3,6-Dioxa-1,8-octylen, 3,6,9-Trioxa-1,11-undecylen, 1,1-, 1,2-, 1,3- oder 1,4-Cyclohexylen, 1,2- oder 1,3-Cyclopentylen, 1,2-, 1,3- oder 1,4-Phenylen und 4,4'-Biphenylen.

6. Wasseremulgierbare Polyisocyanate gemäß Anspruch 1, **dadurch gekennzeichnet, daß** Komponente (B) ausgewählt ist aus der Gruppe bestehend aus 3-Thiapentan-1,5-diol (Thiodiglycol), 1,5-Dimethyl-3-Thiapentan-1,5-diol, 1-Methyl-3-Thiahexan-1,6-diol, 4-Thia-heptan-1,7-diol und 4,4'-Dihydroxydiphenylsulfid.

7. Wasseremulgierbare Polyisocyanate gemäß einem der vorstehenden Ansprüche, **dadurch gekennzeichnet, daß** es sich bei Verbindungen (C) um mindestens einen Ethylenoxidgruppen aufweisenden Monoalkohol handelt, der mindestens 7 Ethylenoxidgruppen aufweist.

8. Wasseremulgierbare Polyisocyanate gemäß einem der vorstehenden Ansprüche, **dadurch gekennzeichnet, daß** es sich bei Verbindungen (C) um Verbindungen der Formel
R¹-O-[-Xᵢ-]ₖ-H
handelt, worin
R¹ C₁ - C₁₈-Alkyl, gegebenenfalls durch ein oder mehrere Sauerstoff- und/oder Schwefelatome unterbrochenes C₂ - C₁₈-Alkyl, C₆ - C₁₂-Aryl, C₅ - C₁₂-Cycloalkyl oder einen fünfbis sechsgliedrigen, Sauerstoff-, Stickstoff- und/oder Schwefelatome aufweisenden Heterocyclus bedeuten,
k für eine ganze Zahl von 7 bis 30 steht und
jedes Xᵢ für i = 1 bis k unabhängig voneinander für -CH₂-CH₂-O- steht.

9. Wasseremulgierbare Polyisocyanate gemäß einem der Ansprüche 1 bis 6, **dadurch gekennzeichnet, daß** es sich bei Verbindungen (C) um solche der allgemeinen Formel
RG-R⁶-DG
handelt, worin
RG mindestens eine gegen Isocyanat reaktive Gruppe bedeutet,
DG mindestens eine dispergieraktive Gruppe ausgewählt aus der Gruppe bestehend aus -COOH, -SO₃H, -OPO₃H und -PO₃H, sowie deren anionischen Formen, denen ein beliebiges Gegenion assoziiert sein kann, und
R⁶ einen 1 bis 20 Kohlenstoffatome enthaltenden aliphatischen, cycloaliphatischen oder aromatischen Rest.

10. Wasseremulgierbare Polyisocyanate gemäß einem der Ansprüche 1 bis 6, **dadurch gekennzeichnet, daß** Verbindungen (C) ausgewählt sind aus der Gruppe bestehend aus Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, am Ring mit Alkyl substituierte Aminobenzolsulfonsäuren, Aminonaphthalincarbonsäure, Hydroxyethansulfonsäure, Hydroxypropansulfonsäure, Mercaptoethansulfonsäure, Mercaptopropansulfonsäure, Aminomethansulfonsäure, Taurin, Aminopropansulfonsäure, N-Alkyl-, -Cycloalkyl- oder -Aryl-substituierte Aminomethansulfonsäuren oder Aminopropansulfonsäure, sowie deren Alkali-, Erdalkali- oder Ammoniumsalze.

11. Wasseremulgierbare Polyisocyanate gemäß einem der Ansprüche 1 bis 6, **dadurch gekennzeichnet, daß** es sich bei den Verbindungen (C) um Phosphorsäureester der Formeln (la) oder (Ib) oder deren Mischungen handelt 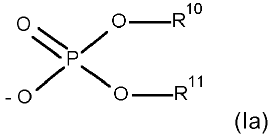 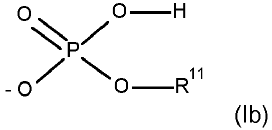 worin
R¹⁰ und R¹¹ unabhängig voneinander Alkyl, bevorzugt C₁- bis C₂₀-Alkyl, Cycloalkyl, bevorzugt C₄-bis C₈-Cycloalkyl, Aryl, bevorzugt C₆- bis C₁₀ Aryl, oder Aralkyl, bevorzugt C₇- bis C₁₅ -Aralkyl, bedeuten können.

12. Wasseremulgierbare Polyisocyanate gemäß Anspruch 11, **dadurch gekennzeichnet, daß** die Reste R¹⁰ und R¹¹ die allgemeine Formel (II)
R¹²-O-[-Xᵢ-]ₙ-
aufweisen, worin
R¹² C₁- bis C₂₀-Alkyl,
n 0 (Null) oder ein positive ganze Zahl von 1 bis 20 und
jedes Xᵢ für i = 1 bis n unabhängig voneinander ausgewählt sein kann aus der Gruppe bestehend aus -CH₂-CH₂-O-, -CH₂-CH(CH₃)-O- und -CH(CH₃)-CH₂-O- sein kann.

13. Verwendung von wasseremulgierbaren Polyisocyanaten gemäß einem der vorstehenden Ansprüche in Beschichtungsmitteln für Holz, Holzfurnier, Papier, Pappe, Karton, Textil, Leder, Vlies, Kunststoffoberflächen, Glas, Keramik, mineralische Baustoffe, Metalle oder beschichtete Metalle.

14. Verwendung von wasseremulgierbaren Polyisocyanaten gemäß einem der vorstehenden Ansprüche als Vernetzerkomponente in wässrigen Dispersionen.

## Claims

1. A water-emulsifiable polyisocyanate comprising
(A) at least one polyisocyanate based on at least one (cyclo)aliphatic diisocyanate,
(B) at least one compound (B) having at least two, preferably two to four, more preferably two to three, and very preferably precisely two isocyanate-reactive groups, comprising at least one group selected from the group consisting of thioether groups (-S-), selanyl groups (-Se-), sulfoxide groups (-S(=O)-), and sulfone groups (-S(=O)₂-),
(C) at least one compound having at least one isocyanate-reactive group and at least one dispersive group, and
(D) optionally solvent(s), where
- the ratio of NCO groups in (A) to isocyanate-reactive groups in (B) and (C) is from at least 5:1 to 100:1,
- the ethylene oxide group content, calculated as 44 g/mol, based on the sum of (A), (B), and (C), is at least 12 wt.%, preferably at least 14, more preferably at least 15 wt.%,
- the amount of component (C), based on (A), is at least 5 and up to 25 wt.%, and
- the viscosity at 23°C to DIN EN ISO 3219/A.3 (October 1994) in a cone/plate system with a shear rate of 1000 s⁻¹ is from 2500 mPas to 12 000 mPas.

2. The water-emulsifiable polyisocyanate according to claim 1, wherein the (cyclo)aliphatic diisocyanate is selected from the group consisting of hexamethylene diisocyanate, 1,3-bis(isocyanatomethyl)cyclohexane, isophorone diisocyanate, 4,4'-di(isocyanatocyclohexyl)methane, and 2,4'-di(isocyanatocyclohexyl)methane.

3. The water-emulsifiable polyisocyanate according to claim 1, wherein the polyisocyanate is an isocyanurate of 1,6-hexamethyIene diisocyanate.

4. The water-emulsifiable polyisocyanate according to any of the preceding claims, wherein component (B) is selected from the group consisting of compounds of the formula 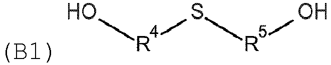 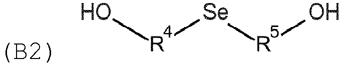 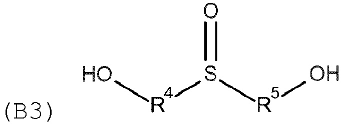 or 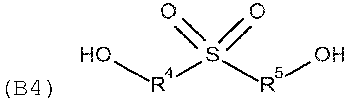 in which
R⁴ and R⁵ independently of one another are each C₁-C₁₈ alkylene, or - optionally interrupted by one or more oxygen atoms and/or sulfur atoms - C₂-C₁₈ alkylene, C₆-C₁₂ arylene, or C₅-C₁₂ cycloalkyl, it being possible for each of the stated radicals to be substituted by functional groups, aryl, alkyl, aryloxy, alkyloxy, halogen, heteroatoms and/or heterocycles.

5. The water-emulsifiable polyisocyanate according to claim 4, wherein R⁴ and R⁵ independently of one another are selected from the group consisting of 1,2-ethylene, 1,2-propylene, 1,3-propylene, 1,4-butylene, 1,5-pentylene, 1,6-hexylene, 2-methyl-1,3-propylene, 2-ethyl-1,3-propylene, 2,2-dimethyl-1,3-propylene, 2,2-dimethyl-1,4-butylene, 3-oxa-1,5-pentylene, 3,6-dioxa-1,8-octylene, 3,6,9-trioxa-1,11-undecylene, 1,1-, 1,2-, 1,3- or 1,4-cyclohexylene, 1,2- or 1,3-cyclopentylene, 1,2-, 1,3-, or 1,4-phenylene, and 4,4'-biphenylene.

6. The water-emulsifiable polyisocyanate according to claim 1, wherein component (B) is selected from the group consisting of 3-thiapentane-1,5-diol (thiodiglycol), 1,5-dimethyl-3-thiapentane-1,5-diol, 1-methyl-3-thiahexane-1,6-diol, 4-thiaheptane-1,7-diol, and 4,4'-dihydroxydiphenyl sulfide.

7. The water-emulsifiable polyisocyanate according to any of the preceding claims, wherein compounds (C) comprise at least one monoalcohol having ethylene oxide groups, which has at least 7 ethylene oxide groups.

8. The water-emulsifiable polyisocyanate according to any of the preceding claims, wherein compounds (C) comprise compounds of the formula
R¹-O-[-Xᵢ-]ₖ-H
in which
R¹ is C₁-C₁₈ alkyl, or - optionally interrupted by one or more oxygen atoms and/or sulfur atoms - C₂-C₁₈ alkyl, C₆-C₁₂ aryl, C₅-C₁₂ cycloalkyl, or a five-to six-membered heterocycle having oxygen, nitrogen and/or sulfur atoms,
k is an integer from 7 to 30, and
each Xᵢ, for i = 1 to k, independently of one another, is -CH₂-CH₂-O-.

9. The water-emulsifiable polyisocyanate according to any of claims 1 to 6, wherein compounds (C) comprise those of the general formula
RG-R⁶-DG
in which
RG is at least one isocyanate-reactive group,
DG is at least one dispersive group selected from the group consisting of -COOH, -SO₃H, -OPO₃H, and -PO₃H, and also anionic forms thereof, which may be associated with any desired counterion, and
R⁶ is an aliphatic, cycloaliphatic, or aromatic radical comprising 1 to 20 carbon atoms.

10. The water-emulsifiable polyisocyanate according to any of claims 1 to 6, wherein compounds (C) are selected from the group consisting of mercaptoacetic acid, mercaptopropionic acid, thiolactic acid, mercaptosuccinic acid, glycine, iminodiacetic acid, sarcosine, alanine, β-alanine, leucine, isoleucine, aminobutyric acid, hydroxyacetic acid, hydroxypivalic acid, lactic acid, hydroxysuccinic acid, hydroxydecanoic acid, dimethylolpropionic acid, dimethylolbutyric acid, ethylenediaminetriacetic acid, hydroxydodecanoic acid, hydroxyhexadecanoic acid, 12-hydroxystearic acid, aminobenzenesulfonic acids substituted on the ring by alkyl, aminonaphthalenecarboxylic acid, hydroxyethanesulfonic acid, hydroxypropanesulfonic acid, mercaptoethanesulfonic acid, mercaptopropanesulfonic acid, aminomethanesulfonic acid, taurine, aminopropanesulfonic acid, N-alkyl-, -cycloalkyl-, or -aryl-substituted aminomethanesulfonic acids or aminopropanesulfonic acid, and also the alkali metal, alkaline earth metal, or ammonium salts thereof.

11. The water-emulsifiable polyisocyanate according to any of claims 1 to 6, wherein the compounds (C) are phosphoric esters of the formulae (Ia) or (Ib) or mixtures thereof 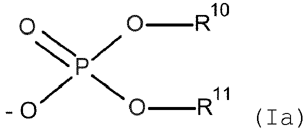 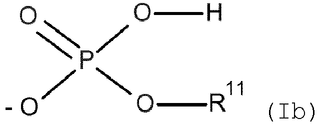 in which
R¹⁰ and R¹¹ independently of one another may be alkyl, preferably C₁ to C₂₀ alkyl, cycloalkyl, preferably C₄ to C₈ cycloalkyl, aryl, preferably C₆ to C₁₀ aryl, or aralkyl, preferably C₇ to C₁₅ aralkyl.

12. The water-emulsifiable polyisocyanate according to claim 11, wherein the radicals R¹⁰ and R¹¹ have the general formula (II)
R¹²-O-[-Xᵢ-]ₙ-
in which
R¹² is C₁ to C₂₀ alkyl,
n is 0 (zero) or a positive integer from 1 to 20, and
each Xᵢ, for i = 1 to n, independently of one another, may be selected from the group consisting of -CH₂-CH₂-O-, -CH₂-CH(CH₃)-O-, and -CH(CH₃)-CH₂-O-.

13. The use of water-emulsifiable polyisocyanates according to any of the preceding claims in coating materials for wood, wood veneer, paper, board, card, textile, leather, nonwoven, plastics surfaces, glass, ceramic, mineral building materials, metals, or coated metals.

14. The use of water-emulsifiable polyisocyanates according to any of the preceding claims as a crosslinking component in aqueous dispersions.

## Revendications

1. Polyisocyanates émulsifiables dans l'eau, contenant :
(A) au moins un polyisocyanate à base d'au moins un diisocyanate (cyclo)aliphatique,
(B) au moins un composé (B) contenant au moins deux, de préférence deux à quatre, de manière particulièrement préférée deux à trois et de manière tout particulièrement préférée exactement deux, groupes réactifs avec les isocyanates, qui contient au moins un groupe choisi dans le groupe constitué par les groupes thioéther (-S-), les groupes sélanyle (-Se-), les groupes sulfoxyde (-S(=O)-) et les groupes sulfone (-S(=O)₂-),
(C) au moins un composé contenant au moins un groupe réactif avec les isocyanates et au moins un groupe à action dispersante, et
(D) éventuellement un solvant,
- le rapport entre les groupes NCO dans (A) et les groupes réactifs avec les isocyanates dans (B) et (C) étant d'au moins 5:1 à 100:1,
- la teneur en groupes oxyde d'éthylène, calculée comme étant de 44 g/mole, par rapport à la somme de (A), (B) et (C), étant d'au moins 12 % en poids, de préférence d'au moins 14, de manière particulièrement préférée d'au moins 15 % en poids,
- la teneur en composant (C), par rapport à (A), étant d'au moins 5 et de jusqu'à 25 % en poids, et
- la viscosité à 23 °C selon DIN EN ISO 3219/A.3 (octobre 1994) dans un système cône-plan avec un gradient de vitesse de 1 000 s⁻¹ étant de 2 500 mPas à 12 000 mPas.

2. Polyisocyanates émulsifiables dans l'eau selon la revendication 1, **caractérisés en ce que** le diisocyanate (cyclo)aliphatique est choisi dans le groupe constitué par le diisocyanate d'hexaméthylène, le 1,3-bis(isocyanatométhyl)cyclohexane, le diisocyanate d'isophorone, le 4,4'-di(isocyanatocyclohexyl)méthane et le 2,4'-di(isocyanatohexyl)méthane.

3. Polyisocyanates émulsifiables dans l'eau selon la revendication 1, **caractérisés en ce que** le polyisocyanate est un isocyanurate de diisocyanate de 1,6-hexaméthylène.

4. Polyisocyanates émulsifiables dans l'eau selon l'une quelconque des revendications précédentes, **caractérisés en ce que** le composant (B) est choisi dans le groupe constitué par les composés de formule 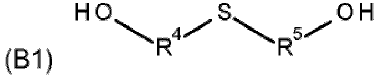 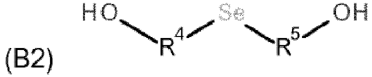 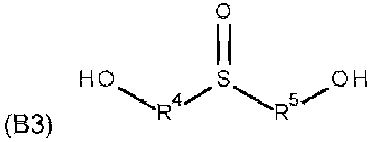 ou 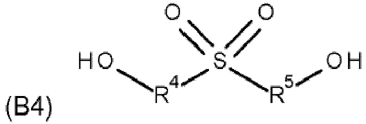 dans lesquelles
R⁴ et R⁵ représentent chacun indépendamment l'un de l'autre alkylène en C₁-C₁₈, alkylène en C₂-C₁₈ éventuellement interrompu par un ou plusieurs atomes d'oxygène et/ou de soufre, arylène en C₆-C₁₂, cycloalkyle en C₅-C₁₂, les radicaux mentionnés pouvant chacun être substitués par des groupes fonctionnels, aryle, alkyle, aryloxy, alkyloxy, halogène, des hétéroatomes et/ou des hétérocycles.

5. Polyisocyanates émulsifiables dans l'eau selon la revendication 4, **caractérisés en ce que** R⁴ et R⁵ sont choisis indépendamment l'un de l'autre dans le groupe constitué par 1,2-éthylène, le 1,2-propylène, le 1,3-propylène, le 1,4-butylène, le 1,5-pentylène, le 1,6-hexylène, le 2-méthyl-1,3-propylène, le 2-éthyl-1,3-propylène, le 2,2-diméthyl-1,3-propylène, le 2,2-diméthyl-1,4-butylène, le 3-oxa-1,5-pentylène, le 3,6-dioxa-1,8-octylène, le 3,6,9-trioxa-1,11-undécylène, le 1,1-, 1,2-, 1,3- ou 1,4-cyclohexylène, le 1,2- ou 1,3-cyclopentylène, le 1,2-, 1,3- ou 1,4-phénylène et le 4,4'-biphénylène.

6. Polyisocyanates émulsifiables dans l'eau selon la revendication 1, **caractérisés en ce que** le composant (B) est choisi dans le groupe constitué par le 3-thiapentane-1,5-diol (thiodiglycol), le 1,5-diméthyl-3-thiapentane-1,5-diol, le 1-méthyl-3-thiahexane-1,6-diol, le 4-thiaheptane-1,7-diol et le sulfure de 4,4'-dihydroxydiphényle.

7. Polyisocyanates émulsifiables dans l'eau selon l'une quelconque des revendications précédentes, **caractérisés en ce que** les composés (C) sont au moins un monoalcool comprenant des groupes oxyde d'éthylène, qui comprend au moins 7 groupes oxyde d'éthylène.

8. Polyisocyanates émulsifiables dans l'eau selon l'une quelconque des revendications précédentes, **caractérisés en ce que** les composés (C) sont des composés de formule
R¹-O-[-Xᵢ-]ₖ-H
dans laquelle
R¹ signifie alkyle en C₁-C₁₈, alkyle en C₂-C₁₈ éventuellement interrompu par un ou plusieurs atomes d'oxygène et/ou de soufre, aryle en C₆-C₁₂, cycloalkyle en C_{S}-C₁₂ ou un hétérocycle de cinq à six éléments, comprenant des atomes d'oxygène, d'azote et/ou de soufre,
k représente un nombre entier de 7 à 30, et
chacun des Xᵢ pour i = 1 à k représentent indépendamment les uns des autres -CH₂-CH₂-O-.

9. Polyisocyanates émulsifiables dans l'eau selon l'une quelconque des revendications 1 à 6, **caractérisés en ce que** les composés (C) sont des composés de la formule générale
RG-R⁶-DG
dans laquelle
RG signifie au moins un groupe réactif avec les isocyanates,
DG signifie au moins un groupe à action dispersante choisi dans le groupe constitué par -COOH, -SO₃H, -OPO₃H et -PO₃H, ainsi que leurs formes anioniques, auxquelles un contre-ion quelconque peut être associé, et
R⁶ signifie un radical aliphatique, cycloaliphatique ou aromatique contenant 1 à 20 atomes de carbone.

10. Polyisocyanates émulsifiables dans l'eau selon l'une quelconque des revendications 1 à 6, **caractérisés en ce que** les composés (C) sont choisis dans le groupe constitué par l'acide mercapoacétique, l'acide mercaptopropionique, l'acide thiolactique, l'acide mercaptosuccinique, la glycine, l'acide iminodiacétique, la sarcosine, l'alanine, la β-alanine, la leucine, l'isoleucine, l'acide aminobutyrique, l'acide hydroxyacétique, l'acide hydroxypivalique, l'acide lactique, l'acide hydroxysuccinique, l'acide hydroxydécanoïque, l'acide diméthylolpropionique, l'acide diméthylolbutyrique, l'acide éthylène-diamine triacétique, l'acide hydroxydodécanoïque, l'acide hydroxyhexadécanoïque, l'acide 12-hydroxystéarique, les acides aminobenzène-sulfoniques à substitution alkyle sur le cycle, l'acide aminonaphtaline-carboxylique, l'acide hydroxyéthane-sulfonique, l'acide hydroxypropane-sulfonique, l'acide mercaptoéthane-sulfonique, l'acide mercaptopropane-sulfonique, l'acide aminométhane-sulfonique, la taurine, l'acide aminopropane-sulfonique, les acides aminométhane-sulfoniques à substitution N-alkyle, -cycloalkyle ou - aryle ou l'acide aminopropane-sulfonique, ainsi que leurs sels alcalins, alcalino-terreux ou d'ammonium.

11. Polyisocyanates émulsifiables dans l'eau selon l'une quelconque des revendications 1 à 6, **caractérisés en ce que** les composés (C) sont des esters de l'acide phosphorique de formule (Ia) ou (Ib) ou leurs mélanges 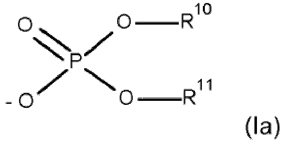 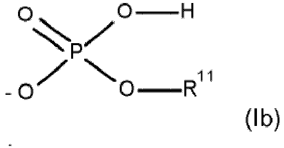 dans lesquelles
R¹⁰ et R¹¹ peuvent signifier indépendamment l'un de l'autre alkyle, de préférence alkyle en C₁ à C₂₀, cycloalkyle, de préférence cycloalkyle en C₄ à C₈, aryle, de préférence aryle en C₆ à C₁₀, ou aralkyle, de préférence aralkyle en C₇ à C₁₅.

12. Polyisocyanates émulsifiables dans l'eau selon la revendication 11, **caractérisés en ce que** les radicaux R¹⁰ et R¹¹ présentent la formule (II)
R¹²-O-[-Xᵢ-]ₙ-
dans laquelle
R¹² signifie alkyle en C₁ à C₂₀,
n signifie 0 (zéro) ou un nombre entier positif de 1 à 20, et
chacun des Xᵢ pour i = 1 à n peuvent être choisis indépendamment les uns des autres dans le groupe constitué par -CH₂-CH₂-O-, -CH₂-CH(CH₃)-O- et -CH(CH₃)-CH₂-O- .

13. Utilisation de polyisocyanates émulsifiables dans l'eau selon l'une quelconque des revendications précédentes dans des agents de revêtement pour le bois, le placage en bois, le papier, le carton, le bristol les textiles, le cuir, les non-tissés, les surfaces en matière plastique, le verre, la céramique, les matériaux de construction minéraux, les métaux ou les métaux revêtus.

14. Utilisation de polyisocyanates émulsifiables dans l'eau selon l'une quelconque des revendications précédentes en tant que composant de réticulation dans des dispersions aqueuses.
